# EUROPEAN PATENT APPLICATION

(11) **EP 1 391 496 A1**
(43) Date of publication of application: **25.02.2004**
(21) Application number: 02769238.3
(22) Date of filing: 22.03.2002
(51) Int. Cl.: C10G 2/00, C07C 1/04

(54) **METHOD FOR PRODUCING PETROL FROM GASEOUS HYDROCARBON RAW MATERIAL**

(30) Priority: 03.05.2001 RU 2001112233
(71) Applicant: Institut Neftekhimicheskogo Sinteza Rossiiskoi Akademii Nauk, Moscow, 117912 (RU)
(72) Inventor: LIN, Galina Ivanovna, Moscow, 117330 (RU); KOLBANOVSKY, Yuly Abramovich, Moscow, 117330 (RU); ROZOVSKY, Alexandr Yakovlevich, Moscow, 117330 (RU); MORTIKOV, Evgeny Sergeevich, Moscow, 107140 (RU); ANDRYUSHKIN, Stanislav Mikhailovich, Primorsk, 188910 (RU)
(74) Representative: Cabinet Hirsch
(86) International application number: PCT/RU2002/000114
(87) International publication number: WO 2002/090467

(57) **Abstract**

A method for the production of ecologically pure high-octane gasoline from hydrocarbon gaseous feed stock by producing synthesis gas diluted or not diluted by ballast nitrogen, carrying out single-stage catalytic synthesis or dimethyl ether from that synthesis gas, carrying out synthesis of gasoline from gases of the second stage of the process and isolating gasoline from the gas stream.

## Description

### Field of the Invention

The proposed invention relates to the field of the petrochemical and oil refining industry, and more concretely to the field of producing synthetic motor fuel from hydrocarbon gaseous feed stock.

### Background of the Invention

### Description of Prior Art

The problem of producing liquid products of different purpose from gaseous hydrocarbon feed stock has for many decades been a subject of research in virtually all industrially developed countries of the world. With regard to the processing of hydrocarbon gases for use in fuel, economists usually note that such a production by itself is at the edge of profitability and cannot compete with fuels produced from oil. At the same time it is noted that the fuel market may accept virtually any amount of gasoline and other kinds of motor fuel, while the capacity of the market for other chemical products is limited.

During an analysis of the economical aspect of the problem, it is also necessary to take into account the cost indexes for motor fuels in remote and out-of-the-way regions, and also ecological problems related to the large amount of associated petroleum gases, often burned in flares, in particular on sea platforms. Another aspect of ecology in view of the possibility of using synthetic motor fuels is their advantage over petroleum fuels as regards the purity of the exhaust gases.

For these reasons, interest with regard to the industrial use of hydrocarbon petroleum gases as feed stock for the production of motor fuels received a new impulse in the last years of the 20th century in a number of industrially developed countries of the world, including Russia.

It follows from an analysis of patent and scientific-and-engineering literature that the classical scheme for the production of motor fuels from hydrocarbon gaseous feed stock includes the steps of producing synthesis gas, producing liquid hydrocarbon products in one or another modification of Fischer-Tropsch synthesis, and finally producing motor fuel of the necessary quality. The use of carbon as feed stock in the production of synthesis gas is known, but this does not change the general structure of the technological scheme. It is also known that automobile gasoline may be produced in a succession of processes: production of synthesis gas, synthesis of oxygen-containing products (methanol or dimethyl ether), production of gasoline.

An economical analysis of different technological schemes for the production of synthetic motor fuels shows that not less than 50% of the capital outlay in the industrial field is spent in the stage of production of synthesis gas, wherewith its fraction in the cost of the final product is 55-60%. In view of this a number of firms in recent years have directed attention to this stage of the technology.

Up to the present time the process of conversion of methane with water vapor in the presence of oxygen on catalysts based on nickel has been exclusively used for the production of synthesis gas.

CH₄ + H₂O = CO + 3H₂ (1)

There are two main drawbacks in this process: its power input and the fact that the creation of a special plant for the production of oxygen is necessary for its realization. This not only imposes a heavy burden on the economy, but also increases the technical risk. It is a fact that it is known that in 1997 at one of the industrial complexes for the production of synthetic fuel, a destructive explosion occurred at a plant for the production of oxygen. The following reactions take place in the presence of oxygen:

CH₄ + 2O₂ = CO₂ + 2H₂O (2)

CH₄ + 0.5O₂ = CO + 2H₂ (3)

Reactions (2) and (3) take place with the release of heat. As a result of the reaction (2), a marked amount of carbonic acid appears in the synthesis gas, so that in some cases the ratio CO/CO₂ is close to two.

In order to remove the first of these drawbacks, the power-consuming vapor conversion according to reaction (1) (or, as it is also called, vapor reforming) began to be combined in one apparatus with the power producing reaction of partial oxidation of methane with oxygen (3). This combined process received the name "autothermal reforming."

Depending on the excess-air coefficient α (ratio of the amount of oxygen in the reaction system to its stochiometric amount for the reaction of complete oxidation of a hydrocarbon to carbonic acid and water) the composition of the products of partial oxidation is varied over wide ranges. At the same time it should be underlined that carrying out the process of partial oxidation with a value α = 0.25, which corresponds to the stoichiometry of the reaction (3), is virtually always accompanied by significant carbon black formation. Therefore, in practice, the process of partial oxidation is carried out at super-stochiometric values of α.

Recently, a variant of autothermal reforming has become known in which partial oxidation is carried out by air or air enriched by oxygen and not carried out by oxygen. Such a process has not yet been used in industry.

A method for production of synthesis gas in the process of partial oxidation of methane is also known. This technology of the Texaco Inc. and Royal Dutch / Shell Group firms has been implemented on an industrial basis. The process is carried out at high temperatures (1200 - 1500°C) and pressures (to 150 atm.). Oxygen is used as the oxidizer in powerful industrial installations.

The method for production of synthesis gas from methane is also realized with use of the process of high-temperature (about 1200°K) catalytic carbonic acid conversion:

CH₄ + CO₂ = 2CO + 2H₂ (4)

This makes it possible to utilize carbonic acid formed in one or other processes of a concrete chemical plant or specially produced.

As regards the technology of producing dimethyl ether (DME), the single-stage method for its production was first mastered by the Haldor Topsoe firm (on the scale of a pilot installation). Synthesis gas consisting of hydrogen, carbon oxide and insignificant amounts of impurities of other gases is used as feed stock in this method. Information was not found in patent and scientific-and-engineering literature concerning the possibility for single-stage production of DME from synthesis gas, in which in addition to carbon oxide and hydrogen, there is carbon dioxide and unreacted methane and also ballast nitrogen.

The final stage of the proposed technology consists in that a mixture of gases, which is emitted from the dimethyl ether synthesis apparatus is sent directly (without additional purification and separation) into a reactor for the single-stage production of high-octane ecologically pure gasoline. Information on such a kind of process was not found in patent and scientific-and-engineering literature.

To some degree the method described above reminds one of the Mobil Oil firm technology known from the 80s for producing gasoline from methyl alcohol. The plant in New Zealand, originally built by Mobil and right now belonging to the Methanex firm, at present only produces methanol. This is related in particular to the fact that the content of aromatic hydrocarbons in gasoline produced from methanol is usually not less than 50%. These include benzene, durol and isodurol. Complaints of an ecological character against such gasoline are obvious in view of international standards Euro-3 (in force from 2000) and Euro-4 (will be entered into force from 2005). It is a fact that the total amount of aromatic hydrocarbons and the content of benzene in such gasoline does not conform with modern requirements.

The analog most similar to the proposed invention is the method for production of a gasoline fraction via synthesis gas and dimethyl ether according to U.S. patent No. 5 459 166 (1995). This technical solution is taken as the prototype of the proposed method. In accordance with the prototype, synthesis gas, containing only carbon oxide and hydrogen, is directed to a dimethyl ether synthesis reactor. Then pure dimethyl ether is directed to a reactor for the production of gasoline. In order to do this it should be isolated from the gases of the synthesis process (not mentioned in the patent). The conversion of dimethyl ether is 55% maximum. The obtained liquid product in respect to fractional composition corresponds to the gasoline fraction.

The invention in accordance with the aforesaid U.S. patent has a number of significant drawbacks. In the first place, it should be noted that only very pure feed stock is used in all the stages of production of the final product. This requires large expenditures on its preparation and purification and makes the technological scheme more complex. In the second place, conversion of dimethyl ether is not at all sufficient from the point of view of economy, since about half of the dimethyl ether remains unreacted, should be separated from the gasoline and returned to the process. Furthermore, the ratio of the yields of the desired product (the gasoline fraction) and the gas, i.e., the selectivity of the process, cannot be recognized as satisfactory either.

It should be noted in conclusion that no information characterizing the final product and showing the practical value of the produced gasoline fraction is provided at all. Actually, if the final product is gasoline and not a gasoline fraction, it should be, at least to a minimum degree, characterized by such indexes as the octane number, the total content of aromatic hydrocarbons and, separately, benzene (its content in the gasoline, in accordance with norms in force in both the U.S.A. and in Europe, is limited to 1%) and the content of unsaturated hydrocarbons. It is these data in particular that could provide the possibility of assessing the ecological prospects for the direct use of the gasoline fraction.

### Summary of the Invention

The proposed invention is directed to overcome the above-indicated drawbacks of the prototype. It ensures the production of a high-octane, ecologically pure gasoline by the most simple and economical technology with a good yield of the final product which conforms with the future (2005) requirements of the Euro-4 standard,

In accordance with the proposed invention, the object is achieved in the following manner: a synthesis gas is produced containing hydrogen, carbon oxides, water, unreacted hydrocarbon remaining after the gas is produced, and also containing or not containing ballast nitrogen; water is isolated by condensation from the synthesis gas and removed; and then gas-phase, single-stage catalytic synthesis of dimethyl ether is carried out; the obtained gaseous mixture without isolation of dimethyl ether therefrom is passed under pressure above modified, highly siliceous zeolite to produce gasoline and the gaseous stream is cooled to isolate gasoline.

The production of the synthesis gas is carried out in a process of partial oxidation of hydrocarbon feed stock under a pressure providing the possibility for its catalytic processing without additional compression.

It may also be produced by the catalytic reforming of hydrocarbon feed stock with water vapor or by autothermal reforming. Wherewith the process is carried out while feeding air, air enriched with oxygen, or pure oxygen.

Synthesis gas may also be produced by catalytic conversion of natural gas with carbonic acid gas.

### Description of the Invention

The feed stock in the process of production of synthesis gas by the partial oxidation method is fed into a reactor after contact with the hot surface of its outer walls, and the water contained in the synthesis gas is removed by condensation to a residual concentration of not more than 0.5 vol.%.

During the process of carrying out the method, the continuous determination of the content of oxygen in the synthesis gas is effected and its supply into the reactor for the production of dimethyl ether is terminated when the concentration of oxygen in the synthesis gas exceeds 0.2 vol.%. Wherewith the synthesis gas is heated to the temperature of the process of dimethyl ether synthesis by passing it through a heat-exchanger positioned between the gasoline synthesis reactor and a gasoline condensation block, and the process of synthesis of gasoline and dimethyl ether is carried out at virtually equal pressures.

The process of producing dimethyl ether and gasoline may be carried out in one reaction apparatus.

So, when synthesis gas is produced in accordance with one of the variants of carrying out the proposed method, for the first time the pressure in the process of partial oxidation of hydrocarbon feed stock is unambiguously linked to the pressure at the stage of catalytic synthesis of dimethyl ether in such a manner that the synthesis gas is fed for catalysis without additional compression. In this respect the proposed method has a substantial distinction over earlier known methods.

It is a fact that in all industrial technologies for the production of synthesis gas, the latter is compressed prior to being fed into catalytic reactors. It is known that for catalytic synthesis processes, in particular, for the process of synthesis of methanol, the synthesis gas is preliminarily freed of the contained therein main mass of water vapors at a relatively low partial pressure thereof. This step is carried out prior to compression in order to avoid a hydraulic impact in the compressors. Only after that is compression carried out to a pressure necessary for the catalytic processing of the synthesis gas.

Consideration in the proposed method is not only given to the standard variant. The feed components are subjected to compression prior to the process of producing the synthesis gas. As a result of this the isolation of water vapors therefrom takes place at a relatively high partial pressure thereof and becomes more effective. For the same reasons, the effectiveness of sulfur purification of the feed components, which is carried out prior to the production of the synthesis gas, is also enhanced. Simultaneously the size of the apparatuses in which these processes are conducted decreases.

In the claimed method for production .of ecologically pure high-octane gasoline, the main part of the sequence of steps is the single-stage process of producing DME. The production of DME from synthesis gas, in which the content of nitrogen may exceed 50%, is not described in literature. Corresponding patent data were not found either. But, at the same time it should be noted that the technology of processing a strongly diluted inert component has its specificities, related in particular to another level of heat release and another heat capacity of the gas. In particular because of this, the aforesaid single-stage process of the Haldor Topsoe firm, based on use of synthesis gas which does not contain ballast and other impurities, cannot be directly compared with the method proposed by the Applicants.

The final stage of the proposed method - single-stage production of high-quality ecologically pure gasoline from DME by catalytic processing - does not have analogs, even though the production of a gasoline fraction (not consumer gasoline) is described in the prototype, true with less selectivity and yield than in the instant invention and from another feed stock (from dimethyl ether which does not contain ballast and other impurities).

The process of producing gasoline from dimethyl ether begins with a reaction for its dehydration:

(CH₃)₂O = C₂H₄ + H₂O (5)

as a result of which there is a transition from an oxygen-containing product to a hydrocarbon. Then a complex sequence of oligomerization, cyclization, disproportionization and isomerization reactions takes place, as a result of which the individual and fractional composition of gasoline is finally formed.

It seems to be obvious that the results of the proposed method for production of gasoline, which is based on reaction (5), should coincide with the indexes of the Mobil process. From the point of view of general chemical concepts this is the case. But the results obtained in accordance with the instant invention turned out to be completely unexpected and do not fall into traditional frameworks.

In the first place, only a gasoline fraction with a yield of 90% is obtained in the proposed method. Hydrocarbons which boil at higher temperatures were not found. In the second place, as distinctive over products obtained where gasoline is produced from methanol, in gasoline produced according to the proposed method, the content of isoparaffins is substantially higher and the content of aromatic hydrocarbons is substantially (almost two times) lower. Wherewith, such ecologically hannful components as benzene, durol and isodurol are not present in their composition. These results have an important ecological meaning, taking into account the fact that the tendency to change the requirements in respect to fuel for carburetor engines is characterized by a limit of the permissible content therein of aromatic hydrocarbons.

The catalytic production of gasoline in accordance with the proposed method is carried out without isolating DME from gas diluted with a large amount of impurities which are inert in this process. This is a substantial distinction of the proposed method over all other technologies of processing oxygen-containing compounds into hydrocarbon products.

Further examples of carrying out the method, which illustrate the claimed invention but do not limit its scope, are presented.

### Examples

### Example 1.

Methane and air were compressed separately to pressures exceeding the pressure in a partial oxidation reactor. After standard adsorptive sulfur purification of methane, the feed components were passed through heat exchangers in which they were heated by the heat of the products of partial oxidation. Mixing the components was carried out directly in the zone of the reaction (as a variant - in front of that zone). In this experiment the excess-air coefficient α in the methane-air mixture was 0.387.

Partial oxidation of methane by air oxygen at a pressure of 54 atm and maximum temperature in the reactor of about 1200°K. was carried out in a flow reactor, the produced synthesis gas was passed through a heat exchanger positioned between the partial oxidation reactor and a water isolation block. Isobaric cooling of the synthesis gas was carried out to condense the water. The residual content of water in the synthesis gas was 0.5 vol.%. The produced synthesis gas was heated at a constant pressure to the temperature at which synthesis of dimethyl ether begins (about 500°K) and was fed to a flow catalytic reactor where the operating pressure was 50 atm. The produced gas mixture, containing dimethyl ether as the desired product, was heated to a temperature of about 700°K and directed to the catalytic flow reactor filled with modified highly silicated zeolite in which synthesis of the gasoline was carried out. The stream of gas exiting from that reactor and containing the desired product - gasoline, was cooled to isolate the gasoline by condensing it. The produced product was sent for analysis.

The produced synthesis gas, depending on the pressure selected in the partial oxidation reactor, may be directly fed into the reactor after isolation of the water, if the pressure of the synthesis gas is greater than the pressure in the DME synthesis reactor or otherwise should be additionally compressed.

The content of methane in the mixture was varied within the limits of the value of the excess-air coefficient α from 0.35 to 0.55.

The produced synthesis gas, with the pressure being maintained approximately constant, was cooled with the intention of isolating water vapors therefrom to a residual level of not more than 0.4-0.5 vol.%. After that the synthesis gas, freed of the excess moisture, was heated in a heat exchanger. With a methane/air ratio corresponding to the value α = 0.41, the produced synthesis gas (after drying) had the following composition: CO - 13.2%, H₂ - 21.7%, CO₂ - 2.5%, CH₄ - 2.7%, nitrogen - to 100%.

The nitrogen-diluted synthesis gas with the composition indicated above was fed into a catalytic reactor in which synthesis of DME took place at a pressure of 50 atm above a combined synthesizing-dehydrating catalyst.

The yields of DME depend on the amount of CO in the synthesis gas, on the pressure and on other conditions of the process. At 50 atm up to 65-70% of carbon of CO pass to DME, which is close to the equilibrium content thereof under these conditions.

The gas produced in the catalytic reactor of DME synthesis was heated in a heat exchanger or by another method, after which it was fed into a gasoline synthesis catalytic reactor. The process was carried out at the same pressure (50 atm) as the synthesis of DME. Conversion of DME was virtually 100%, the yield of the gasoline fraction - 91.5%, the yield of dry gas (C₁-C₃) was 8.5%.

It is important to note that the gasoline produced in accordance with the proposed method, in respect to such an important ecological characteristic as the content of sulfur (not more than 0.5 ppm), is significantly superior to all other kinds of fuel for carburetor engines. The table presented below contains data confirming its high quality.

**Table.**

| Individual composition of hydrocarbons of gasoline fraction, produced from DME | | | | | |
|---|---|---|---|---|---|
| No. | Hydrocarbons | % | No. | Hydrocarbons | % |
| 1 | Propane | - | 17 | 3,3-dimethylpentane | 0.01 |
| 2 | 1-butane | 0.01 | 18 | Cyclohexane | |
| 3 | n-butane | 0.05 | 19 | 2-methylhexane | 2.23 |
| 4 | i-pentane | 0.57 | 20 | 2,3-dimethylpentane | 0.33 |
| 5 | n-pentane | 0.24 | 21 | 1,1-dimethylcyclopentane | |
| 6 | 2,2-dimethylbutane | | 22 | 3-methylhexane | 3.37 |
| 7 | Cyclopentane | 0.02 | 23 | 1,3-dimethylcyelopentane(c) | 0.18 |
| 8 | 2,3-dimethylbutane | 0.25 | 24 | 3-ethylpentane | 0.13 |
| 9 | 2-methylpentane | 1.58 | 25 | 1,2-dimethylcyclopentane(t) | 0.13 |
| 10 | 3-methylpentane | 1.01 | 26 | n-heptane | 0.47 |
| 11 | n-hexane | 0.39 | 27 | 2,2-dimethylhexane | |
| 12 | 2,2-ditnethylpentane | | 28 | 1,2-dimethylcyclopentane(c) | 0.11 |
| 13 | Methylcyclopentane | 0.21 | 29 | 1,1,3-trimethylcyclopentane | |
| 14 | 2,4-dimethylpentane | 0.04 | 30 | Methylcyclohexane | 0.64 |
| 15 | 2,2,3-trimethylbutane | 0.05 | 31 | 2,5-dimethylhexane | |
| 16 | Benzene | 0.04 | 32 | 2,4-dimethylhexane | 0.08 |

| No. | Hydrocarbons | % | No. | Hydrocarbons | % |
|---|---|---|---|---|---|
| 33 | Ethylcyclopentane | 0.28 | 65 | Not identified | |
| 34 | 2,2,3-trimethylpentane | | 66 | Not identified | |
| 35 | 1,2,4-trimethylcyclopentane(tc) | 0.35 | 67 | 2,4-dimethylheptane | 0.42 |
| 36 | 3,3-dimethylhexane | 0.12 | 68 | 2,2,3-trimethylhexane | |
| 37 | Toluene | 0.83 | 69 | Not identified | |
| 38 | 1,2,3-trimethylcyclopentane(tc) | | 70 | 2,6-dimethylheptane | 0.15 |
| 39 | 2,3,4-trimethylpentane | | 71 | 2,5-dimethylheptane | 0.34 |
| 40 | 2,3-dimethylhexane | | 72 | 3,5-dimethylheptane | 0.10 |
| 41 | 2-methyl-3-ethylpentane | 0.30 | 73 | 1,2-dimethylcycloyhexane(c) | |
| 42 | 2-methylheptane | 1.66 | 74 | Ethylcyclohexane | 0.46 |
| 43 | 1,1,2-trimethylcyclopentane | | 75 | Ethylbenzene | 0.51 |
| 44 | 4-methylheptane | 1.45 | 76 | 1,1,3-trimethylcyclohexane | |
| 45 | 3,4-dimethylhexane | 0.07 | 77 | 1,1,4-trimethylcyclohexane | 0.10 |
| 46 | 3-methylheptane | 3.11 | 78 | 1,3,5-trimethylcyclohexane(cc) | 0.16 |
| 47 | 3-ethylhexane | | 79 | 2,3,4-trimethylhexane(α) | 0.52 |
| 48 | 1,2,4-trimethylcyclopentane(ct) | 0.06 | 80 | 2,3,4-trimethylhexane(β) | 0.05 |
| 49 | Not identified | | 81 | Paraxylene | 4.30 |
| 50 | 1,2,3-trimethylcyclopentane(cc) | | 82 | Metaxylene | 5.11 |
| 51 | 1,1-dimethylcyclohexane | 0.89 | 83 | 2,3-dimethylheptane | 0.25 |
| 52 | 1,3-dimethylcyclohexane(c) | | 84 | 4-ethylheptane | |
| 53 | 1,4-dimethylcyclohexane(t) | | 85 | 1,3,5-trimethylcyclohexane(ct) | |
| 54 | 1-methyl-3-ethylcyclopentane(c) | 0.59 | 86 | 4-methyloctane | 1.82 |
| 55 | 1-methyl-3-ethylcyclopentane(t) | 0.75 | 87 | 2-methyloctane | 0.70 |
| 56 | 1-methyl-2-ethylcyclopentane(t) | | 88 | 3-ethylheptane | 0.30 |
| 57 | Not identified | | 89 | Not identified | |
| 58 | 1-methyl-1-ethylcyclopentane | 0.33 | 90 | 3-methyloctane | 1.15 |
| 59 | n-octane | 0.58 | 91 | 1,3-dimethyl-2-ethylcyclopentane(tc) | |
| 60 | 1,2-dimetliylcyclohexane(t) | | 92 | Ortoxylene | 1.77 |
| 61 | 1,3-dimethylcyclohexane(t) | 0.58 | 93 | 1,2-dimethyl-3-ethylcyclopentane(tc) | |
| 62 | 1,4-dimethylcyclohexane | | 94 | 1,2-dimethyl-4-ethylcyclopentane(ct) | |
| 63 | 2,3,5-trimethylhexane | 0.04 | 95 | 1,2,4-trimethylcyclohexane(tt) | 0.26 |
| 64 | 2,2-dimethylheptane | 0.11 | 96 | 1,2-dimethyl-3-ethylcyclopentane(ct) | |

| No. | Hydrocarbons | % | No. | Hydrocarbons | % |
|---|---|---|---|---|---|
| 97 | 1,2,3-trimethylcyclohexane(tt) | 0.42 | 124 | 2,6-dimethyloctane | |
| 98 | 1,1,2-trimethylcyclohexane | 0.51 | 125 | 3,3-dimethyloctane | |
| 99 | 1,2,4-trimethyleyclohexane(cc) | 0.48 | 126 | 2,3,3-trimethylheptane | |
| 100 | 1,2,4-trimethylyclohexane(ct) | | 127 | 2,3,4-trimethylheptane | |
| 101 | 1,2-diethylcyclopentane(t) | 0.15 | 128 | 3,4-dimethyloctane | 0.23 |
| 102 | 1-methyl-3-ethylcyclohexane(c) | 0.64 | 129 | Not identified | |
| 103 | 1,3-diethylcyclopentane(c+t) | 0.29 | 130 | 1-methyl-3-ethylbenzene | 2.16 |
| 104 | Isopropylbenzene | 0.38 | 131 | 1-methyl-4-ethylbenzene | 1.49 |
| 105 | n-nonane | 0.31 | 132 | 1,1,3,4-tetramethylcyclohexane(c) | |
| 106 | 1-methyl-4-ethylcyclohexane(t) | 0.02 | 133 | 1,2,4,5-tetramethylcyelohexane(tct) | |
| 107 | 1,2,3,4-tetramethylcyclohexane(ccc) | 0.04 | 134 | 1,2,3,5-tetramethylcyclohexane(ttc) | |
| 108 | Not identified | 0.05 | 135 | 1,2,4,5-tetramethylcyclohexane(ttt) | |
| 109 | Not identified | | 136 | 1,1,2,4-tetramethylcyclohexane(t) | |
| 110 | Not identified | | 137 | 4-ethyloctane | 0.08 |
| 111 | 1,2,3-trimethylcyclohexane(tc) | 0.30 | 138 | 2,3-dimethyloctane | 0.13 |
| 112 | 1,2,3-trimethylcyclohexane(cc) | | 139 | 1,1-donethyl-4-ethylcyclohexane | |
| 113 | 1-methyl-1-ethylcyclohexane | 0.14 | 140 | 1,2,3,5-tetramethylcyclohexane(ttt) | |
| 114 | 2,4-dimethyloctane | | 141 | 5-methylnonane | 0.79 |
| 115 | 1,1,3,4-tetramethylcyclohexane(t) | 0.14 | 142 | 1-methyl-2-ethylbenzene | 0.53 |
| 116 | 4,4-dimethyloctane | 0.03 | 143 | Not identified | |
| 117 | 1,1,3,5-tetramethylcyclohexane(t) | 0.12 | 144 | 4-methylnonane | |
| 118 | 2,5-dimethyloctane | 0.16 | 145 | 1,3,5-trimethylbenzene | 0.42 |
| 119 | 3,5-dimethyloctane | | 146 | 2-methylnonane | 0.07 |
| 120 | 1-methyl-2-ethylcyclohexane(c) | 0.10 | 147 | 3-ethyloctane | |
| 121 | n-propylbenzene | 0.72 | 148 | 1,2,3,5-tetramethylcyclohexane(ccc) | |
| 122 | 3,6-dimethyloctane | 0.08 | 149 | 1,4-dimethyl-2-ethylcyclohexane(tc) | |
| 123 | 2,7-dimethyloctane | | 150 | 3-methylnonane | 0.27 |

| No. | Hydrocarbons | % | No. | Hydrocarbons | % |
|---|---|---|---|---|---|
| 151 | 1,1,2,3-tetramethylcyclohexane(tct) | 0.03 | 163 | 1,2,3,4-tetramethylyclohexane(cct) | 0.77 |
| 152 | 1,2-dimethyl-4-ethylcyclohexane(tc) | 0.06 | 164 | 1,2,3,4-tetramethylcyclohexane(ctc) | 0.12 |
| 153 | 1,4-dimethyl-2-ethylcyclohexane(tt) | 0.12 | 165 | 1-methyl-3-n-propylcylohexane(c) | |
| 154 | 1,3-dimethyl-4-ethylcyclohexane(tt) | 0.03 | 166 | 1,3-dimethyl-2-ethylcyclohexane(tt) | |
| 155 | 1,2,4-trimethylbenzene | 11.62 | 167 | 1,2-dimethyl-3-ethylcyclohexane(tt) | |
| 156 | 1,2-dimethyl-4-ethylcyclohexane(tt) | | 168 | 1-methyl-3-isopropylbenzene | |
| 157 | 1,1-dimethyl-2-ethylcyclohexane | 3.99 | 169 | n-decane | 0.24 |
| 158 | 1,2,3,5-tetramelhylcyclohexane(cct) | 3.04 | 170 | Σ(C₁₁+C₁₂) | 23.38 |
| 159 | 1,2,3,4-tetramethylcyclohexane(tct) | 0.40 | 171 | olefins C₄+C₅ | 0.08 |
| 160 | 1,4-dimethyl-2-ethylcyclohexane(cc) | 0.30 | 172 | olefins C₆ | 0.23 |
| 161 | 1,2,3,4-tetramethylcyclohexane(ctt) | 0.36 | 173 | olefins C₇ | 0.62 |
| 162 | 1-methyl-3-isopropylcyclohexane(c) | | 174 | olefins C₈ | 0.35 |

| | | |
|---|---|---|
| **TOTAL** | n-paraffins | 2.3% |
| | i-paraffins | 31.0% |
| | cycloparaffins | 35.4% |
| | aromatic hydrocarbons | 30.0% |
| | olefins | 1.3% |
| **OCTANE NUMBER** | | 92.2 |
| Notes in respect to the table. 1. During isolation of the gasoline, a portion of the C₄-C₆ fractions was lost. 2. The letters "c" and "t" designate cis- and trans- conformers. | | |

### Example 2.

Methane and air were separately compressed to pressures exceeding the pressure in the partial oxidation reactor. After standard sulfur purification of the methane, the feed components were passed through heat exchangers in which they were heated by the heat of the products of partial oxidation. Mixing the components was carried out directly in the reaction zone. The content of methane in the mixture was varied within the limits of the values of the excess-air coefficient α from 0.35 to 0.55.

Where the pressure in the partial oxidation reactor is greater than in the DME synthesis reactor, the synthesis gas produced therein was used in two variants. In the first case the synthesis gas after isolation of the water was fed directly into the DME synthesis reactor.

While in the second case, the produced synthesis gas, maintaining the pressure approximately constant, was cooled in order to isolate water vapors therefrom to a level not exceeding 0.4-0.5 vol.%. After that the synthesis gas freed from the excess moisture was heated in a heat exchanger. Where the methane/air ratio corresponds to the value α = 0.41, the produced synthesis gas (after drying) has the following composition: CO - 13.2%, H₂ - 21.7%, CO₂ - 2.5%, CH₄ - 2.7%, nitrogen - balance to 100%.

Nitrogen-diluted synthesis gas, the composition of which is indicated above, was fed into a catalytic reactor in which DME synthesis was carried out at a pressure of 50 atm above a combined synthesizing-dehydrating catalyst. The DME yields depend on the amount of CO in the synthesis gas, on the pressure and on other conditions of the process. At 50 atm up to 65-70% of the carbon of the CO is converted to DME which is close to an equilibrium content thereof under these conditions.

The gas produced in the DME synthesis catalytic reactor was heated in the heat exchanger or by any other way, after which it was fed to a gasoline synthesis catalytic reactor. The process was carried out at the same pressure (50 atm) as DME synthesis. DME conversion was virtually 100%, the yield of the gasoline fraction was 91.5%, and the yield of dry (C₁-C₃) gas - 8.5%.

It is important to note that the gasoline produced according to the proposed method, in respect to such an important ecological characteristic as the sulfur content (not more than 0.5 ppm), is significantly superior to all other types of fuel for carburetor engines. The data provided in the table confirm its high quality.

### Example 3.

All the conditions of Example 1 remain without change except for the conditions of mixing the feed components at the input to the partial oxidation reactor. They were mixed in a special mixer prior to being fed into the reaction zone. Wherewith, on the whole, similar results were obtained, but the residual content of methane in the synthesis gas decreased from 2.7 to 2.3%.

### Example 4.

Hydrocarbon gas with a composition of: CH₄ - 86.9%, C₂H₆ - 10.1 %, C₃H₈ - 3%, was used as the feed stock. Wherewith, after drying, synthesis gas was obtained with the following composition: CO - 14.1%, H₂ - 21.5%, CO₂ - 2.9%, the content of residual methane was 2.9%. The increase of the content of CO favorably affected the product yield of the process, which increased virtually proportional to the increase of the content of CO in the synthesis gas, i.e. by about 7%.

### Example 5.

DME synthesis was carried out at a pressure of 100 atm under conditions similar to those indicated in Example 1. Wherewith up to 85% of the carbon of CO passed to DME, which is close to the equilibrium content thereof under these conditions. Further processing as in Example 1.

## Claims

1. A method for producing gasoline from a hydrocarbon gaseous feed stock, comprising producing dimethyl ether as an intermediate, **characterized in that** a synthesis gas is produced at high pressure, the synthesis gas containing hydrogen, carbon oxides, water, unreacted hydrocarbon remaining after the gas is produced, and also containing or not containing ballast nitrogen, water is isolated by condensation from the synthesis gas and removed, and gas-phase, single-stage catalytic synthesis of dimethyl ether is carried out, the produced gaseous mixture without isolation of dimethyl ether therefrom is passed under pressure above modified, highly siliceous zeolite to produce gasoline and the gaseous stream is cooled to isolate gasoline.

2. The method according to claim 1, **characterized in that** the synthesis gas is produced in a process of partial oxidation of hydrocarbon feed stock under pressure providing the possibility for its catalytic processing without additional compression.

3. The method according to claim 1, **characterized in that** the synthesis gas is produced by catalytic reforming of hydrocarbon feed stock with water vapor.

4. The method according to claim 1, **characterized in that** the synthesis gas is produced by autothermal reforming.

5. The method according to claim 2 or claim 4, **characterized in that** the process is carried out while feeding air or air enriched with oxygen or pure oxygen.

6. The method according to claim 1, **characterized in that** synthesis gas is produced by catalytic conversion of natural gas with carbonic acid gas.

7. The method according to claim 1 or claim 2, **characterized in that** the feed stock for the process of production of synthesis gas by the partial oxidation method is fed into a reactor after contact with the hot surface of its outer walls.

8. The method according to claim 1, **characterized in that** water contained in the synthesis gas is removed by condensation to a residual concentration of not more than 0.5 vol.%.

9. The method according to claim 1, **characterized in that** continuous determination of the content of oxygen in the synthesis gas is carried out and its supply into the reactor for production of dimethyl ether is terminated when the concentration of oxygen in the synthesis gas exceeds 0.2 vol.%.

10. The method according to claim 1, **characterized in that** the synthesis gas is heated to the temperature of the process of synthesis of dimethyl ether by passing it through a heat-exchanger positioned between the gasoline synthesis reactor and a gasoline condensation block.

11. The method according to claim 1, **characterized in that** the process of synthesis of gasoline and dimethyl ether is carried out at virtually equal pressures.

12. The method according to claim 1, **characterized in that** the process of producing dimethyl ether and gasoline is carried out in one reaction apparatus.
